# FASCICULE DE BREVET EUROPEEN

(11) **EP 1 941 176 B1**
(45) Date de publication et mention de la délivrance du brevet: **23.12.2009**
(21) Numéro de dépôt: 06806039.1
(22) Date de dépôt: 04.10.2006
(51) Int. Cl.: F16D 65/18

(54) **FREIN DE STATIONNEMENT AUTOMATIQUE**
AUTOMATISCHE FESTSTELLBREMSE
AUTOMATIC PARKING BRAKE

(30) Priorité: 05.10.2005 FR 0510156
(43) Date de publication de la demande: 09.07.2008
(73) Titulaire: ROBERT BOSCH GMBH, 70442 Stuttgart (DE)
(72) Inventeur: TRISTANO, Nicola, I-75100 Matera (IT); SCHEFZIK, Monika, I-70050 Santo Spirito (IT); ONORATO, Francesco, I-75100 Matera (IT); CORRADO, Caruzo, I-70121 Bari (IT); PATANO, Pietro, I-70027 Palo Del Colle (IT)
(74) Mandataire: Hurwic, Aleksander Wiktor
(86) Numéro de dépôt international: PCT/EP2006/009608
(87) Numéro de publication internationale: WO 2007/039292

(56) Documents cités:
- EP-A- 0 866 236
- WO-A-2004/027282
- WO-A-2004/065814
- US-A- 3 983 975

## Description

L'invention concerne un frein de stationnent automatique permettant d'agir sur un frein à disque et notamment un dispositif à ressort intégré dans le piston de commande d'un frein à disque. Ce dispositif à ressort est pré réglable pour tenir compte des phénomènes de refroidissement du disque de frein et des garnitures de freins.

L'invention concerne donc également un procédé de préréglage d'un tel frein de stationnement automatique.

L'utilisation de composants élastiques interposés dans la chaîne de transmission des efforts de freinage transmis dans un frein de stationnement automatique pour réduire l'effet thermique est déjà connus par exemple dans les documents US 103 02 357 et EP 0 866 236. Cependant, ces systèmes ne sont pas assez compacts et sont difficiles à adapter pour les intégrer dans les pistons de freins sans augmenter la taille des pistons.

Par ailleurs dans les systèmes de freins de stationnement automatiques intégrés aux étriers et connus dans la technique (voir US 6.399.235, et DE 199 34 161) aucune mesure de force de freinage n'est faite exceptée la mesure du courant d'alimentation du moteur électrique de l'actionneur du frein de stationnement automatique.

La force d'immobilisation du véhicule est stoppée lorsque le courant d'alimentation du moteur atteint un niveau déterminé.

Cependant, différents paramètres tels que la température qui peuvent affecter la correspondance entre le courant d'alimentation du moteur et la force de freinage d'immobilisation du véhicule ne sont pas pris en compte. Le document WO 2004065814 révèle le préambule de la revendication 1.

Cette invention décrit un dispositif compact et simple présentant un comportement élastique et qui peut s'adapter à différentes tailles de pistons d'applications courantes. Avec le dispositif selon l'invention, il n'est pas nécessaire d'augmenter les dimensions des freins. Un tel frein selon l'invention permet de réaliser une compensation de la relaxation thermique due au refroidissement et permet la surveillance de la force d'immobilisation du véhicule.

L'invention fournit donc un dispositif simple et compact capable compenser la relaxation thermique et, en plus, de fournir des informations précises sur la charge d'immobilisation du véhicule efficace du véhicule.

L'invention concerne donc un frein de stationnement automatique avec les caractéristiques de la revendication 1.

On prévoira également avantageusement une deuxième rondelle entre ledit ressort et le fond de la cavité du piston.

Selon une forme de réalisation préférée de l'invention, ledit ressort prévu dans la cavité du piston comporte un empilement de disques ressorts.

Par ailleurs, on prévoira avantageusement que les disques ressorts de cet empilement possèdent des éléments de saillies radiales intérieurs et extérieure qui peuvent coulisser dans des rainures prévues, d'une part, dans la surface périphérique du noyau central et, d'autre part, dans la surface intérieure de la cavité du piston. Cela permettra d'interdire au noyau central de tourner par rapport au piston

On prévoira également que les disques ressorts possèdent des encoches périphériques pour permettre au fluide de frein de circuler facilement à l'intérieur de la cavité du piston.

Pour la même raison, on prévoira alternativement que la surface intérieure de la cavité du piston possède des rainures ou des entretoises.

Selon une variante de réalisation, on prévoira également que l'empilement de disques ressorts est contenu dans une enveloppe souple, ce qui permettra d'interdire au fluide de frein de pénétrer dans l'empilement de disques ressorts.

L'invention concerne également un procédé de réglage d'un frein de stationnement tel que décrit précédemment. Ce procédé prévoit:
- de placer le ressort, la rondelle et le dispositif d'appui dans la cavité du piston,
- puis d'appliquer une force de compression au ressort correspondant à la pré charge à appliquer au ressort,
- ensuite, on règle le dispositif d'appui de façon à ce qu'il s'appuie sur ladite rondelle.

Si le dispositif d'appui est ledit premier écrou vissé dans l'ouverture de la cavité du piston, le réglage du dispositif d'appui prévoit de visser cet écrou jusqu'à ce qu'il soit en contact avec ladite rondelle.

Ce procédé prévoit également de régler la position dudit deuxième écrou en l'absence d'application de force de compression et de mesurer la course de déplacement du noyau central provoquée par l'application d'une force de compression.

Le procédé de l'invention prévoit aussi de mesurer les forces compression appliquées et de mesurer les déplacements du noyau central. On détecte également les changements de pentes de la courbe caractéristique (force/course) de façon à détecter la course permettant d'obtenir un bon réglage, la position dudit deuxième écrou est alors réglée en l'absence d'application de force.

Les différents objets et caractéristiques de l'invention apparaîtront plus clairement dans la description qui va suivre et dans les figures annexées qui représentent:
- la figure 1, une vue éclatée du dispositif selon l'invention,
- la figure 2, une vue en coupe axiale du dispositif selon l'invention,
- les figures 3a à 3b, des courbes de fonctionnement du frein de stationnement automatique selon l'invention.

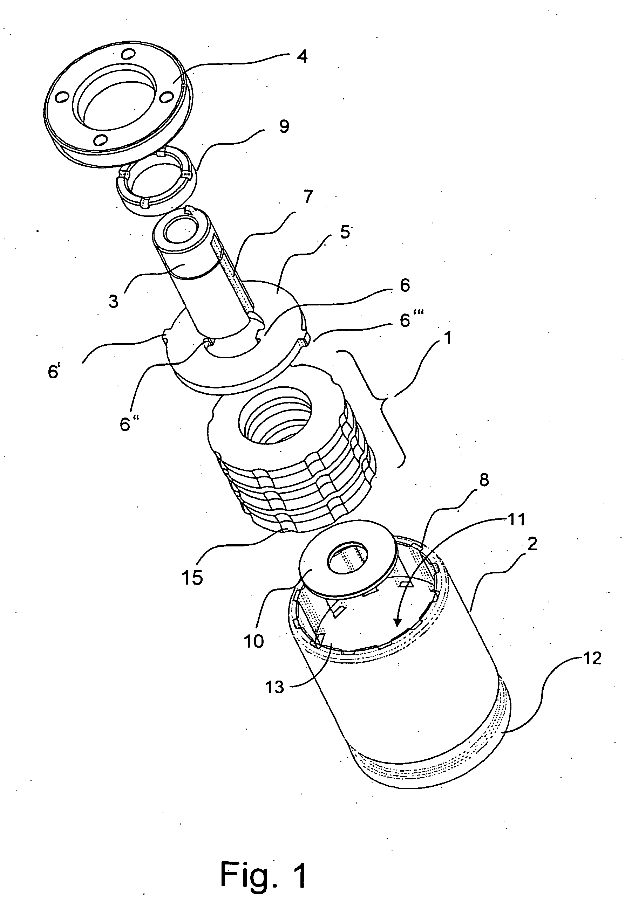

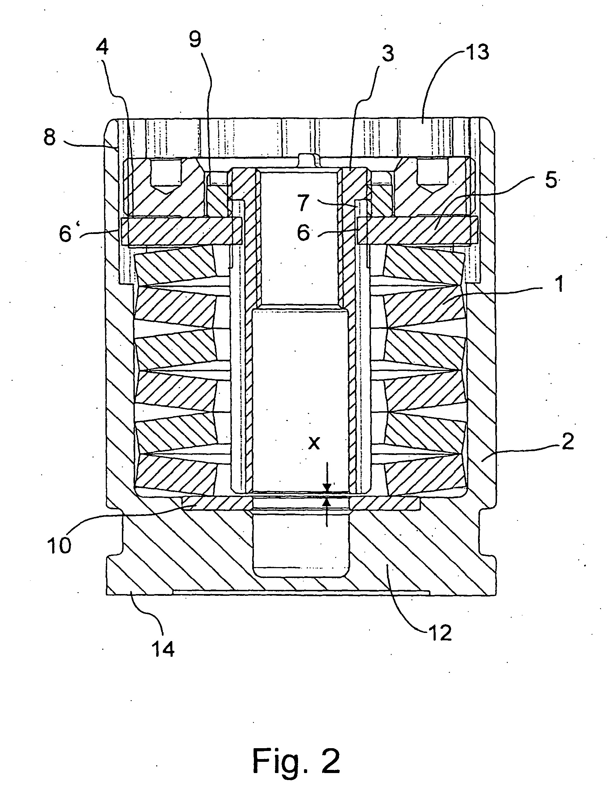

Comme illustré par les figures 1 et 2, le dispositif de l'invention se compose d'un empilement de disques ressorts 1 qui est placé dans la cavité 11 du piston de frein 2. L'empilement de disques ressorts est destiné à appuyer sur le fond 12 de la cavité du piston, lequel fond est situé du côté de la face du piston qui sert de face d'appui 14 vers un patin de frein.

Un noyau central 3 est placé selon l'axe de l'empilement de disques ressorts.

Une rondelle 5 est enfilée sur le noyau 3 et permet d'appuyer sur l'empilement de disques ressorts.

L'entrée 13 de la cavité 11 du piston est munie d'un filetage intérieur. Un premier écrou 4 qui est muni d'un filetage extérieur, est vissé dans le filetage intérieur de l'entrée 13 de la cavité 11 du piston de frein et permet d'exercer une pression sur la rondelle 5 pour comprimer l'empilement de disques ressorts contre le fond 12 de la cavité. Cette disposition permet, comme on le verra ultérieurement de déterminer une charge initiale ou pré charge de l'empilement de disques ressorts.

Par ailleurs, un deuxième écrou 9 est vissé sur l'extrémité du noyau central 3 qui émerge de la rondelle 5 et permet de régler la longueur de noyau qui peut être contenue à l'intérieur de l'empilement de disques ressorts. Comme on le verra, cette disposition permet de déterminer la compression maximale de l'empilement de disques ressorts.

Pour compléter et pour une question de précision de réglage du dispositif, une rondelle de butée 10 est prévue dans le fond de la cavité du piston. L'empilement 1 de disques ressorts appuie sur le fond de la cavité du piston par l'intermédiaire de cette rondelle butée 10.

Dans le dispositif ainsi décrit une force de freinage fournie par le système de frein de stationnement automatique est transférée par l'intermédiaire du noyau central 3 au piston de frein 2 par l'empilement de disques ressorts 1 et la rondelle de butée 10.

On voit donc sur la figure 2, qu'en vissant l'écrou 4 dans la cavité du piston, on force le déplacement vers le bas (sur la figure 2) de la rondelle 5. Celle-ci appuie sur l'empilement de disques ressorts 1 qui est ainsi comprimé entre la rondelle 10 et le fond du piston. On réalise ainsi un réglage de la pré charge de l'empilement de disques ressorts.

Par ailleurs, le noyau central coulisse librement axialement à travers la rondelle 5. Il en est de même du coulissement de l'écrou 9 dans l'écrou 4.

L'écrou 9 qui est vissé sur le noyau central 3 permet de régler la position du noyau central par rapport à la rondelle 5 et en fin de compte de régler la position de l'extrémité du noyau central par rapport à la rondelle 10. Cela permet donc de régler l'espace X entre l'extrémité du noyau 3 et la rondelle 10, ce qui définit la course du ressort.

L'empilement de disques ressorts ne donnera aucune contribution élastique jusqu'à ce que la pré charge de l'empilement de disques ressorts soit atteinte.

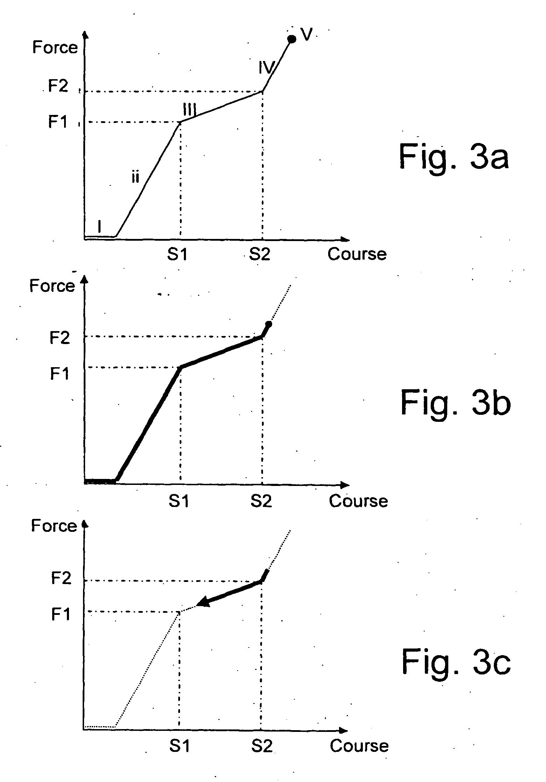

La figure 3a représente une courbe de fonctionnement du système de freinage selon l'invention.

La figure 3a représente la caractéristique générale de fonctionnement d'un tel dispositif durant le fonctionnement du frein de stationnement automatique.

La courbe de la figure 3a représente donc la caractéristique générale d'un système appliqué à un frein à disque dont la course de l'empilement de disques à ressort est limitée par les deux écrous 4 et 9. Cette courbe peut être divisées en cinq régions différentes référencées I à V.

Ces régions sont obtenues à l'aide d'une mesure indirecte de la force appliquée aux dispositifs de freinage, par exemple à l'aide du courant d'alimentation du moteur électrique de commande. F1 correspond à la pré charge de l'empilement de disques à ressort qui a été définie par le vissage de l'écrou 4. Cette pré charge peut être définie comme étant égale à la force de freinage minimale exigée pour obtenir une immobilisation du véhicule.

La force de freinage minimale exigée peut correspondre à la législation, à des normes ou à des préconisations d'un constructeur automobile.

Par exemple, la force minimale de freinage permet de maintenir immobile le véhicule muni de sa charge maximale autorisée sur une pente à 30%. F2 est le niveau de force à la compression maximum de l'empilement de disques à ressort et qui est défini par le vissage de l'écrou 9 sur le noyau central 3.

La course S1-S2 représente la compression maximum de l'empilement de disques à ressort. Cette course correspond à la distance X indiquée sur la figure 2 et est déterminée pour chaque cas d'application de sorte que la compression (course) de l'empilement de disques à ressort soit suffisante pour compenser la course due à la relaxation thermique de la chaîne. La force de l'écrou 4 sur l'empilement de disques ressorts est donc ajustée avec l'exactitude nécessaire.

A titre d'exemple, la course S1-S2 = X pourra avoir pour valeur 0,3 mm.

Dans la région I la force est très basse puisqu'elle correspond à la course morte du système de freinage qui doit être surmontée.

Dans la région II la force générée par le frein de stationnement est inférieure à la valeur de la pré charge de l'empilement de disques ressorts. Le comportement du système de freinage de stationnement est déterminé par l'élasticité des étriers de frein et le dispositif à ressort n'a pas d'influence.

Quand la force appliquée atteint la valeur de la pré charge F1 de l'empilement de disques ressorts, celui-ci commence à être comprimée jusqu'à atteindre la région III.

Dans la région III, apparaît un changement apparent de l'élasticité de la chaîne de freinage et on constate de ce fait un changement significatif de la pente de la courbe par rapport à la pente de la région II.

Quand la force appliquée atteint le niveau de compression maximum de l'empilement de disques ressorts (aucune autre compression du ressort n'est maintenant possible) le système arrive dans à la région IV.

Dans la région IV le dispositif à ressort n'agit plus et le comportement du système est déterminé seulement par le dispositif de frein à disque et notamment par les étriers du frein à disque.

Si la force produite par l'élément de commande du frein de stationnement (moteur électrique par exemple) augmente jusqu'à atteindre sa valeur maximale (par exemple jusqu'à caler le moteur) on arrive au point V où il ne peut plus fournir d'augmentation force ni de course.

C'est pourquoi, on pourra choisir de fonctionner selon la caractéristique de la figure 3b.

La figure 3b montre un fonctionnement préféré du système selon l'invention à l'aide de la courbe de la force en fonction de la course pendant un cycle d'application du frein de stationnement. Cette courbe est similaire à celle de la figure 3a.

La force est augmentée jusqu'à ce que le deuxième point de changement de pente, après la région III, soit identifiée lors de la mesure indirecte de la force. Dès que ce deuxième point de changement de pente est atteint l'augmentation de force est arrêtée. De cette façon on garantit que la force de freinage restera au-dessus de la valeur de freinage exigée et restera de force égale même après relaxation thermique.

La position de l'écrou 9 du dispositif à ressort est déterminée de sorte que la compression correspondante du dispositif à ressort soit suffisante pour compenser la course due à la relaxation thermique.

La figure 3c représente le comportement du système et notamment la course du dispositif de freinage lors du refroidissement. En raison du rétrécissement des garnitures et du disque dû à ce refroidissement, la course et la force de freinage diminuent mais sont limitées par l'expansion du dispositif à ressort de sorte que la force de freinage reste toujours au-dessus de la valeur de freinage exigée F1.

Les valeurs des forces correspondant aux positions des deux écrous 4 et 9 du dispositif à ressort sont connues très exactement (par exemple pendant le pré réglage). Elles peuvent être employées pour calibrer la fonction indirecte de mesure de force pendant chaque application spécifique.

La courbe de fonctionnement ainsi décrite permet également la surveillance des composants de la chaîne de frein de stationnement: le rapport entre les valeurs de forces aux deux points de changement de pentes lors de la mesure indirecte de la force correspond au rapport de la pré charge à la charge finale du dispositif à ressort. Les valeurs mesurées ainsi que leurs rapports peuvent être stockés dans une mémoire et être comparés aux rapports prévus. De cette façon les changements possibles du dispositif à ressort peuvent être surveillés.

L'exactitude de la méthode mentionnée ci-dessus est tributaire de l'exactitude du pré réglage des positions des écrous 4 et 9.

Pour obtenir un réglage aussi précis que possible de la force de pré charge et de la course de l'empilement de disques ressorts, tout en prenant en compte les tolérances d'élasticité de tous les composants, le procédé de préréglage prévoit de régler indépendamment les positions des deux écrous 4 et 9.

Le piston assemblé est mis dans un dispositif capable d'appliquer des forces axiales de compression entre le noyau central 3 et le piston 2. Cette force doit pouvoir varier entre 0 et une valeur maximum dans la gamme de 20kN. L'application de cette force se fait en mesurant la force et la course.

Le réglage des positions des écrous se fera avec des outils spéciaux permettant de tourner les écrous.

Une force correspondant à la pré charge à appliquer à l'empilement de disques ressorts est appliquée à la rondelle 5. L'écrou 4 peut ainsi être vissé aisément dans la cavité 11 du piston jusqu'à être en contact avec la rondelle 5 ce qui permet de régler ainsi la pré charge de l'empilement de disques ressorts 1.

Ensuite lors de la libération on peut mesurer la course de retour du noyau central. La force n'étant plus appliquée au dispositif, la position de l'écrou 9 peut être modifiée et on peut à nouveau mesurer la course en appliquant une force puis en la supprimant. Les détection de changements de pentes telles qu'on les observent sur les courbes 3a à 3b permettent de détecter les valeurs des forces F1 et F2 aux point de changements de pentes, ce qui permet de régler la course X de déplacement axial du noyau central 3.

Lorsque le pré réglage a été fait, les positions des écrous 4 et 9 peuvent être figées par tout moyen par exemple en détériorant les filetages dans lesquels les écrous sont filetés, en réalisant un point de soudure sur les filetages ou par tout autre moyen.

Par ailleurs, la rondelle 5 possède des éléments en saillies radiales tels que 6 et 6' qui coulissent dans des rainures 7 et 8 du noyau et du piston respectivement. Par exemple, l'élément 6 fait saillie vers l'intérieur de la rondelle 5 et coulisse dans la rainure 7 du noyau central 3. L'élément 6' fait saillie vers l'extérieur de la rondelle 5 et coulisse dans la rainure 8 de la cavité 11 du piston.

Ces éléments permettent d'interdire la rotation du noyau central 3. Les rainures 7 dans le noyau sont assez longues pour assurer cette fonction même quand le noyau est tiré loin de la rondelle 10 pour le remplacement de garnitures par exemple.

Pour permettre un bon fonctionnement du piston de frein, l'invention prévoit de plus que les disques ressorts ont une forme périphérique particulière pour permettre un passage du liquide de freins entre les disques.

Par exemple, il est prévu que les disques ont des encoches 15 sur leur périphérie comme cela est visible sur la figure 1. Alternativement, il est possible de prévoir des rainures et/ou des entretoises sur la paroi intérieure du piston de façon à créer des chemins de passage pour le fluide de frein.

On peut également prévoir d'enrober l'empilement de disques ressorts dans une membrane en caoutchouc.

Dans ce qui précède on a prévu un empilement de disques ressorts, mais ce dispositif à ressort pourrait être conçu différemment et prendre toute autre forme.

Le dispositif selon l'invention comporte donc un piston dont la cavité est de dimension suffisante pour contenir un empilement de disques ressorts et pour disposer, selon l'axe du piston, un dispositif à vis/écrou pour régler l'application les forces de freinage du frein de stationnement automatique. Une telle disposition permet d'éviter une augmentation additionnelle de la dimension du piston et donc du frein.

L'empilement de disques de ressort n'affecte pas le fonctionnement du frein de service. Il augmente l'élasticité du frein dans une gamme limitée de forces juste nécessaires pour l'actionnement du frein de stationnement.

Comme dans les systèmes courants de freins de stationnement automatiques, la force d'immobilisation du véhicule est produite par un moteur électrique agissant sur un dispositif de transmission vis-écrou par l'intermédiaire d'un réducteur de vitesse. Dans le dispositif selon l'invention, la force de commande de freinage est transférée à partir du moteur au piston de frein par l'empilement de ressort.

L'empilement de disques ressorts est pré chargé par l'écrou 4 et la rondelle 5 de telle sorte que le ressort ne donne aucune contribution élastique tant que la force de pré charge n'est pas atteinte.

La valeur de la force de pré charge est choisie selon l'application spécifique pour être égale à la force minimale d'immobilisation du véhicule que le frein de stationnement doit garantir même après toute relaxation thermique du dispositif de freinage. A titre d'exemple, sa valeur pourra être approximativement comprise dans la gamme 13 - 15kN.

Selon une forme de réalisation de l'invention, la rigidité de l'empilement de disques ressorts est choisie sensiblement équivalente à celle du dispositif de freinage (frein à étrier) dans son entier de sorte que, quand la force d'immobilisation du véhicule atteint la valeur de pré charge, l'élasticité produite par le moteur soit approximativement doublée.

En détectant le taux d'augmentation du courant d'alimentation du moteur, on identifie facilement le changement de pente de la caractéristique de fonctionnement comme cela sera décrit ultérieurement et ce changement est facilement identifiable.

L'unité de commande de frein de stationnement obtient ainsi l'information selon laquelle la force d'immobilisation du véhicule produite a atteint le niveau acceptable minimal.

Si, selon le mode de fonctionnement du frein de stationnement, aucune compensation thermique de relaxation n'est nécessaire, le cycle d'application peut être arrêté.

S'il est nécessaire qu'une compensation d'une relaxation thermique soit envisagée, le cycle d'application continue.

Selon les caractéristiques des éléments du frein à disque, un effet de relaxation thermique maximum peut être estimé pour chaque application spécifique. Cet effet correspondra à une réduction d'épaisseur des garnitures d'environ de 0,2mm globalement. Pour remédier à cet inconvénient, on doit s'assurer que l'empilement de disques ressorts est comprimé au moins de la même quantité même après refroidissement du dispositif de freinage.

Par ailleurs une force de freinage supérieure à celle nécessaire à assurer l'immobilisation du véhicule peut être préjudiciable pour les dispositifs de freinage. C'est pourquoi le dispositif de l'invention permet d'ajuster les forces de freinage appliquées par le système de frein de stationnement automatique.

## Revendications

1. Frein de stationnement automatique agissant sur un frein à disque comprenant
- un dispositif élastique situé à l'intérieur d'une cavité (11) d'un piston (2) d'un frein, ledit dispositif étant destiné à recevoir, par l'entrée (13) de la cavité, des efforts de freinage et de les retransmettre au fond (12) de la cavité (11) dudit piston pour que celui-ci exerce une force de freinage sur des patins de frein du frein à disque,
- un ressort (1) permettant d'appuyer sur le fond (12) de la cavité du piston,
- une première rondelle (5) étant placée entre l'entrée (13) de la cavité et le ressort (1),
- un dispositif d'appui (4) permettant d'appuyer sur la rondelle (5) pour que celle-ci exerce une force de pré charge sur le ressort (1) **caractérisé en ce que** le dispositif d'appui comporte
un premier écrou (4) muni d'un filetage extérieur ou bague filetée sur sa surface périphérique extérieure, **en ce que** la paroi intérieure de l'entrée (13) de la cavité (11) comporte un filetage intérieur dans lequel est vissé ledit premier écrou (4),
et **en ce qu'**il comporte un noyau central (3) disposé selon l'axe du ressort (1) et de la rondelle (5), destiné à appuyer sur le fond (12) de la cavité du piston par une première extrémité, une deuxième extrémité du noyau central dépassant de la première rondelle vers l'entrée (13) de la cavité et comportant une partie filetée,
- un deuxième écrou (9) étant vissé sur cette partie filetée et étant destiné à régler la position du noyau central par rapport au fond (12) de la cavité (11) du piston et à appuyer sur la première rondelle pour transmettre des efforts de freinage au fond de la cavité du piston.

2. Frein de stationnement automatique selon la revendication 1, **caractérisé en ce qu'**il comporte une deuxième rondelle (10) entre ledit ressort (1) et le fond (12) de la cavité du piston.

3. Frein de stationnement automatique selon la revendication 1, **caractérisé en ce que** ledit ressort (1) comporte un empilement de disques ressorts.

4. Frein de stationnement automatique selon la revendication 5, **caractérisé en ce que** les disques ressorts possèdent des éléments de saillies radiales intérieure et extérieure (6, 6') qui peuvent coulisser dans des rainures (7, 8) prévues, d'une part, dans la surface périphérique du noyau central et, d'autre part, dans la surface intérieure de la cavité (11) du piston.

5. Frein de stationnement automatique selon la revendication 3, **caractérisé en ce que** les disques ressorts possèdent des encoches périphériques (15).

6. Frein de stationnement automatique selon la revendication 3, **caractérisé en ce que** la surface intérieure de la cavité (11) du piston possède des rainures ou des entretoises.

7. Frein de stationnement automatique selon la revendication 3, **caractérisé en ce que** l'empilement de disques ressorts est contenu dans une enveloppe souple.

8. Procédé de réglage d'un frein de stationnement selon l'une quelconque des revendications précédentes, **caractérisé en ce qu'**il prévoit de placer le ressort (1), la rondelle (5) et le dispositif d'appui dans la cavité (11) du piston (2), d'appliquer une force de compression au ressort (1) puis de régler le dispositif d'appui de façon à ce qu'il s'appuie sur la rondelle (5).

9. Procédé selon la revendication 8, **caractérisé en ce que** le dispositif d'appui comporte ledit premier écrou (4) vissé dans l'ouverture (13) de la cavité (11) du piston et **en ce que** le réglage du dispositif d'appui prévoit de visser ledit premier écrou jusqu'à ce qu'il soit en contact avec ladite rondelle (5).

10. Procédé selon la revendication 9, **caractérisé en ce qu'**il prévoit de régler la position dudit deuxième écrou (9) en l'absence d'application de force de compression et de mesurer la course de déplacement du noyau central provoquée par l'application d'une force de compression.

11. Procédé selon la revendication 9, **caractérisé en ce qu'**il prévoit de mesurer les forces de compression appliquées, de mesurer les déplacements du noyau central (3) et de détecter les changements de pentes de la courbe caractéristique (force appliquée/course) de façon à détecter la course permettant d'obtenir un bon réglage, la position dudit deuxième écrou étant réglée en l'absence d'application de force.

## Claims

1. Automatic parking brake acting on a disk brake comprising an elastic device situated inside a cavity (11) of a piston (2) of a brake, said device being intended to receive, via the inlet (13) of the cavity, braking forces and to pass them on to the end (12) of the cavity (11) of said piston so that the latter can exert a braking force on brake pads of the disk brake,
- a spring (1) allowing pressure to be applied to the end (12) of the piston cavity,
- a first washer (5) positioned between the inlet (13) of the cavity and the spring (1),
- a pressing device (4) allowing pressure to be applied to the washer (5) so that it preloads the spring (1), **characterized in that** the pressing device comprises a first nut (4) provided with an external screw thread or ring threaded on its external peripheral surface, **in that** the interior wall of the inlet (13) of the cavity (11) comprises an internal screw thread into which said first nut (4) is screwed, and **in that** it comprises a central core (3) positioned along the axis of the spring (1) and of the washer (5), and intended to press against the end (12) of the piston cavity via a first extremity, a second extremity of the central core protruding from beyond the first washer towards the inlet (13) of the cavity and comprising a threaded part,
- a second nut (9) being screwed onto this threaded part and being intended to adjust the position of the central core with respect to the end (12) of the cavity (11) of the piston and to press against the first washer in order to transmit braking forces to the end of the cavity of the piston.

2. Automatic parking brake according to claim 1, **characterized in that** it comprises a second washer (10) between said spring (1) and the end (12) of the cavity of the piston.

3. Automatic parking brake according to claim 1, **characterized in that** said spring (1) comprises a stack of spring disks.

4. Automatic parking brake according to claim 3, **characterized in that** the spring disks have internal and external radial projections (6, 6') which can slide in grooves (7, 8) provided, on the one hand, in the peripheral surface of the central core and, on the other hand, in the interior surface of the cavity (11) of the piston.

5. Automatic parking brake according to claim 3, **characterized in that** the spring disks have peripheral notches (15).

6. Automatic parking brake according to claim 3, **characterized in that** the interior surface of the cavity (11) of the piston has grooves or spacer pieces.

7. Automatic parking brake according to claim 3, **characterized in that** the stack of spring disks is contained in a flexible envelope.

8. Method of adjusting a parking brake according to any one of the preceding claims, **characterized in that** it envisages placing the spring (1), the washer (5) and the pressing device in the cavity (11) of the piston (2), applying a compression force to the spring (1) then adjusting the pressing device in such a way that it presses against the washer (5).

9. Method according to claim 8, **characterized in that** the pressing device comprises said first nut (4) screwed into the opening (13) of the cavity (11) of the piston and **in that** adjusting the pressing device envisages tightening said first nut until it comes into contact with said washer (5).

10. Method according to claim 9, **characterized in that** it envisages adjusting the position of said second nut (9) with no compression force applied and measuring the distance traveled by the central core as a result of the application of a compression force.

11. Method according to claim 9, **characterized in that** it envisages measuring the compression forces applied, measuring the travel of the central core (3) and detecting the changes in gradient of the characteristic (force applied/travel) curve so as to detect the travel that will provide for good adjustment, the position of said second nut being adjusted with no force applied.

## Patentansprüche

1. Automatische Feststellbremse, die auf eine Scheibenbremse einwirkt, mit
- einer elastischen Vorrichtung, die in einem Hohlraum (11) eines Kolbens (2) einer Bremse liegt, wobei die Vorrichtung dazu bestimmt ist, über den Einlass (13) des Hohlraums Bremskräfte aufzunehmen und diese zum Boden (12) des Hohlraums (11) des Kolbens zu übertragen, damit dieser eine Bremskraft auf Bremsbelagträger der Scheibenbremse ausübt,
- einer Feder (1), mit der es möglich ist, auf den Boden (12) des Hohlraums des Kolbens zu drücken,
- einer ersten Scheibe (5), die zwischen dem Einlass (13) des Hohlraums und der Feder (1) liegt,
- einer Andrückvorrichtung (4), mit der auf die Scheibe (5) gedrückt werden kann, damit diese eine Vorspannkraft auf die Feder (1) ausübt, **dadurch gekennzeichnet, dass** die Andrückvorrichtung
eine erste Mutter (4) mit einem Außengewinde oder einem Gewindering auf ihrer äußeren Umfangsfläche aufweist und die Innenwand des Einlasses (13) des Hohlraums (11) ein Innengewinde aufweist, in das die erste Mutter (4) geschraubt ist,
und dass sie einen mittleren Kern (3) aufweist, der entlang der Achse der Feder (1) und der Scheibe (5) angeordnet und dazu vorgesehen ist, über ein erstes Ende auf den Boden (12) des Hohlraums des Kolbens zu drücken, wobei ein zweites Ende des mittleren Kerns von der ersten Scheibe zum Einlass (13) des Hohlraums hervorsteht und einen Gewindeabschnitt aufweist,
wobei eine zweite Mutter (9) auf diesen Gewindeabschnitt geschraubt und dazu vorgesehen ist, die Position des mittleren Kerns in Bezug auf den Boden (12) des Hohlraums (11) des Kolbens einzustellen und auf die erste Scheibe zu drücken, um Bremskräfte zum Boden des Hohlraums des Kolbens zu übertragen.

2. Automatische Feststellbremse nach Anspruch 1, **dadurch gekennzeichnet, dass** sie eine zweite Scheibe (10) zwischen der Feder (1) und dem Boden (12) des Hohlraums des Kolbens aufweist.

3. Automatische Feststellbremse nach Anspruch 1, **dadurch gekennzeichnet, dass** die Feder (1) einen Federscheibenstapel umfasst.

4. Automatische Feststellbremse nach Anspruch 5, **dadurch gekennzeichnet, dass** die Federscheiben Elemente (6, 6') aufweisen, die radial nach innen und nach außen hervorstehen und in Nuten (7, 8) gleiten können, die zum einen in der Umfangsfläche des mittleren Kerns und zum anderen in der Innenfläche des Hohlraums (11) des Kolbens vorgesehen sind.

5. Automatische Feststellbremse nach Anspruch 3, **dadurch gekennzeichnet, dass** die Federscheiben Umfangseinkerbungen (15) aufweisen.

6. Automatische Feststellbremse nach Anspruch 3, **dadurch gekennzeichnet, dass** die Innenfläche des Hohlraums (11) des Kolbens Rillen oder Zwischenelemente aufweist.

7. Automatische Feststellbremse nach Anspruch 3, **dadurch gekennzeichnet, dass** der Federscheibenstapel in einer nachgiebigen Hülle enthalten ist.

8. Verfahren zum Einstellen einer Feststellbremse nach einem der vorhergehenden Ansprüche, **dadurch gekennzeichnet, dass** es das Anordnen der Feder (1), der Scheibe (5) und der Andrückvorrichtung im Hohlraum (11) des Kolbens (2), das Aufbringen einer Komprimierungskraft auf die Feder (1) und anschließend das Einstellen der Andrückvorrichtung umfasst, so dass sich diese auf die Scheibe (5) stützt.

9. Verfahren nach Anspruch 8, **dadurch gekennzeichnet, dass** die Andrückvorrichtung die erste Mutter (4) aufweist, die in die Öffnung (13) des Hohlraums (11) des Kolbens geschraubt wird, und das Einstellen der Andrückvorrichtung das Einschrauben der ersten Mutter umfasst, bis diese mit der Scheibe (5) in Kontakt ist.

10. Verfahren nach Anspruch 9, **dadurch gekennzeichnet, dass** es das Einstellen der Position der zweiten Mutter (9), wenn keine Komprimierungskraft vorliegt, und das Messen des Verlagerungswegs des mittleren Kerns umfasst, der durch das Aufbringen einer Komprimierungskraft hervorgerufen wird.

11. Verfahren nach Anspruch 9, **dadurch gekennzeichnet, dass** es das Messen der aufgebrachten Komprimierungskräfte, das Messen der Verlagerungen des mittleren Kerns (3) und das Erfassen der Steigungssänderungen der Kennlinie (aufgebrachte Kraft/Weg) umfasst, so dass der Weg erfasst wird, der eine gute Einstellung ermöglicht, wobei die Position der zweiten Mutter eingestellt wird, wenn keine Kraft aufgebracht wird.
